# Europäisches Patentamt
# European Patent Office
# Office européen des brevets

(19)

(11) Veröffentlichungsnummer : **0 018 646**
**B1**

(12)

# EUROPÄISCHE PATENTSCHRIFT

(45) Veröffentlichungstag der Patentschrift :
**16.02.83**

(51) Int. Cl.³ : **G 11 B 5/55// G11B5/58**

(21) Anmeldenummer : **80102369.8**

(22) Anmeldetag : **02.05.80**

(54) **Positioniereinrichtung für einen Magnetkopf eines Magnetbandgerätes.**

(30) Priorität : **04.05.79 DE 2918020**

(43) Veröffentlichungstag der Anmeldung :
**12.11.80 Patentblatt 80/23**

(45) Bekanntmachung des Hinweises auf die Patenterteilung : **16.02.83 Patentblatt 83/07**

(84) Benannte Vertragsstaaten :
**AT DE FR GB NL**

(56) Entgegenhaltungen :
**Keine**

(73) Patentinhaber : **BASF Aktiengesellschaft
Carl-Bosch-Strasse 38
D-6700 Ludwigshafen (DE)**

(72) Erfinder : **Schoettle, Klaus
Ladenburger Strasse 70
D-6900 Heidelberg (DE)** .
Erfinder : **Kaemmer, Eduard
Stefansring 6
D-6701 Dannstadt-Schauerheim (DE)**
Erfinder : **Dobler, Peter
Wanderstrasse 61
D-6700 Ludwigshafen (DE)**
Erfinder : **Gliniorz, Lothar
Carl-Bosch-Ring 24
D-6710 Frankenthal (DE)**
Erfinder : **Hoffmann, Werner
Bannwasserstrasse 62
D-6700 Ludwigshafen (DE)**

Jouve, 18, rue St-Denis, 75001 Paris, France

## Positioniereinrichtung für einen Magnetkopf eines Magnetbandgerätes

Die Erfindung betrifft eine Positioniereinrichtung für einen Magnetkopf eines Magnetbandgerätes, bestehend aus einem Kopfträger, der den Magnetkopf in der Ebene des Magnetbandes verstellt und der einen in das Gewinde einer Gewindespindel eingreifenden, schneidenförmigen Mitnehmer sowie eine gegenüberliegende und an der Gewindespindel anliegende Andruckfeder aufweist.

In der DE-AS 20 17 894 ist ein Positioniermechanismus beschrieben, bei dem auf einem Drehteller zwei Magnetköpfe mit Hilfe einer Gewindespindel gekoppelt mit der Drehung des Drehtellers radial längs der gleichen Geraden verschiebbar sind. Dazu ist die Gewindespindel über Zahnräder mit der Achse des Drehtellers verbunden. Eine von einem Arm, der mit den Magnetköpfen in Verbindung steht, getragene kegelstumpfförmige Rolle steht in Eingriff mit dem Gewinde der Spindel.

Ein derartig gestalteter Spindelantrieb ist für einen kontinuierlichen Positionierbetrieb geeignet, beispielsweise für scheibenförmige Aufzeichnungsträger mit spiralförmig verlaufenden Spuren, jedoch nicht für stufenweise Bewegungen eines Magnetkopfes zur Auffindung einer ausgewählten Spur einer mehrspurigen Aufzeichnung auf einem Magnetband, da infolge des Spiels zwischen der Rolle und dem Spindelgewinde und auch zwischen den Zahnrädern nicht die für die geringe Spurbreite erforderliche Einstellgenauigkeit erreichbar ist. Ferner wirkt sich der Verschleiß der Antriebsteile auf die Einstellgenauigkeit aus.

Mit dem IBM Technical Disclosure Bulletin Vol. 7, n° 6, November 1964, S 510 und 511 ist eine Positioniereinrichtung für einen Tonkopf zu einem überbreiten Magnetband bekannt, wobei ein Mitnehmer, dem eine Andruckfeder gegenüberliegt, vorgesehen ist. Dieser Mitnehmer besitzt einen dem Flankenwinkel des Gewindes der Spindel angepaßten Keilwinkel, so daß die Schneidenkante weit in den Gewindegang eingreift und darin an dessen Flanken anliegt. Zum Zurücksetzen des Positionierers bzw. des Magnetkopfes von Hand ist ein Kantenteil vorgesehen, das dem Mitnehmer in Bezug auf die Spindel gegenüberliegt und das zum Zurücksetzen mit dem Gewinde der Spindel in Eingriff gebracht wird. Der Mitnehmer allein ist somit für eine stabile und verschleißfreie Rücksetzoperation nicht geeignet. Eine ausreichende Genauigkeit ist nur über erforderliche Feinstbearbeitung des Spindelgewindes erreichbar, die jedoch durch unvermeidbaren Verschleiß durch die Schneidenkante zunichte gemacht wird.

Aufgabe der Erfindung ist es, eine Positioniereinrichtung der eingangs bezeichneten Art zu schaffen, bei der bei mehrspurigem Aufzeichnungsbetrieb auf einem Magnetband der Magnetkopf jeweils auf eine der Spuren exakt ausrichtbar ist, wobei eine feste und genaue Zuordnung zwischen der Magnetkopfverschiebung und der Drehung der Gewindespindel gewährleistet sein soll.

Diese Aufgabe wird erfindungsgemäß mit einer Positioniereinrichtung der eingangs beschriebenen Art zur Positionierung quer zu den Magnetbandspuren mit einem schneidenförmigen Mitnehmer gelöst, dessen Keilwinkel größer als der Winkel zwischen zwei Flanken des Gewindeganges der Gewindespindel ist.

Damit werden die Außenflanken der Gewindegänge ausgenutzt, deren Abstand die größtmögliche Abstützung für die Schneidenflächen des Mitnehmers bieten, wobei etwa linienförmiger Kontakt erreicht wird und überraschenderweise ohne Feinstbearbeitung eine große Genauigkeit erzielt wird.

In zweckmäßiger Ausführung der Einrichtung sind die Gewindespindel und der Kopfträger in einem im wesentlichen aus zwei parallelen Plattformen bestehenden Rahmen gelagert, wobei der Kopfträger zur Spindelachse parallel verschieblich angeordnet ist.

Durch die erfindungsgemäße Ausbildung der Führung des Mitnehmers an der Gewindespindel ist auf einfache Weise erreicht, daß der Verschiebemechanismus des Kopfträgers spielfrei und selbstjustierend ist. Die geforderte Zuordnung von Magnetkopf und Spindeldrehung ist dadurch über die gesamte Betriebsdauer gewährleistet. Ferner weist die Bewegungsübertragung durch die linienartige Berührung zwischen dem Mitnehmerkeil und den Gewindegängen eine weit geringere Reibung auf als bei den bisher üblichen Spindeltrieben, so daß das notwendige Antriebsmoment für die Spindel kleiner ist als bei bekannten Spindelpositionierern.

In den Zeichnungen ist ein Ausführungsbeispiel der erfindungsgemäßen Positioniereinrichtung dargestellt und nachfolgend beschrieben.

Es zeigen :

Figur 1 eine perspektivische Ansicht der Positioniereinrichtung ;

Figur 2 eine schematische Darstellung des Gewindespindelmechanismus ;

Figur 3 ein Schaltschema der Steuerung des Kopfträgerantriebs.

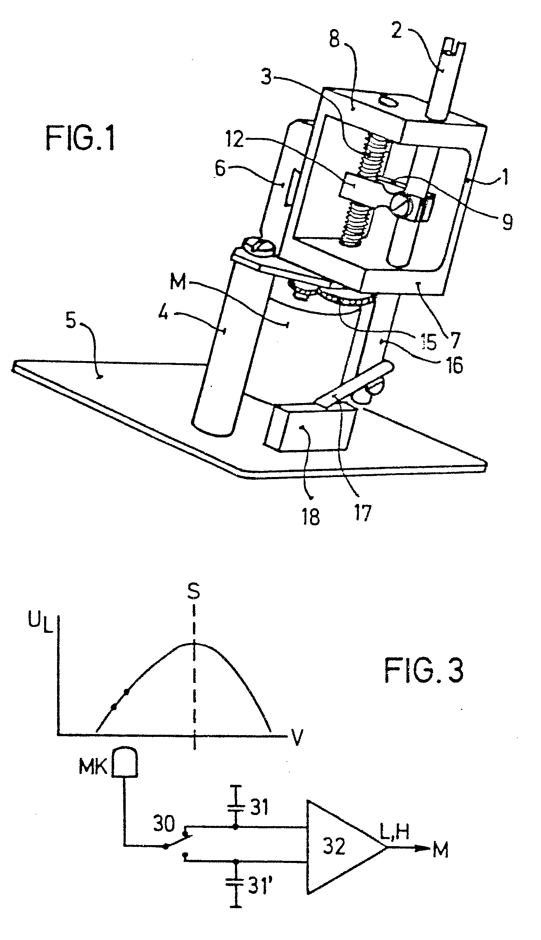

Wie Figur 1 erkennen läßt, ist ein Lagerbock 1 für den Kopfträger 2 und die Gewindespindel 3 einerseits über ein Distanzstück 4 auf einer Grundplatte 5 und andererseits an einer Führungsschiene 6 mittels Schrauben befestigt. Mittels der Führungsschiene ist die gesamte Positioniereinrichtung in den Rahmen eines nicht dargestellten mehrspurigen Magnetbandgerätes einschiebbar und durch geräteseitige Fixiermittel, beispielsweise Klemmschrauben feststellbar.

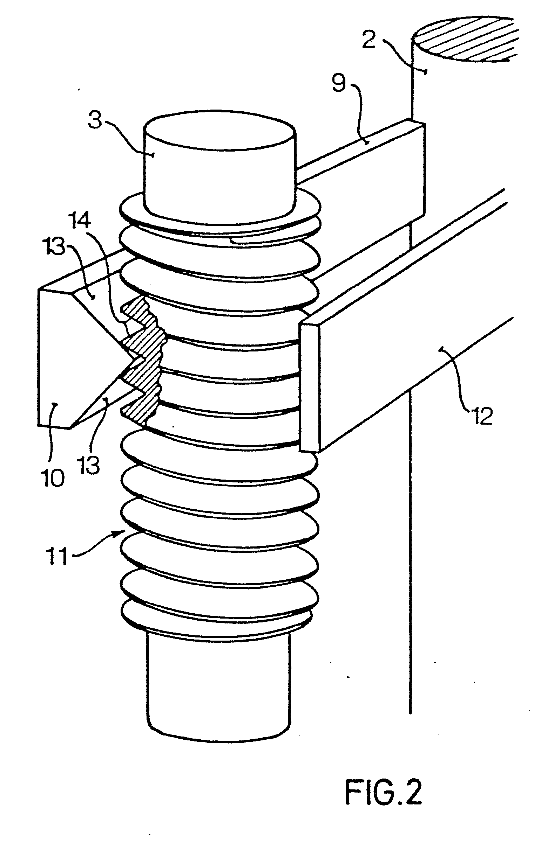

In den Plattformen 7 und 8 des Lagerbocks sind der in Form einer zylindrischen Stange gebildete Kopfträger 2 verschieblich und die Gewindespindel 3 drehbar gehalten. Der Kopfträger dient zur Verschiebung und Ausrichtung des Magnetkopfes (in der Zeichnung nicht dargestellt) auf die einzelnen Spuren einer mehrspurigen Aufzeichnung auf einem Magnetband. Der Antrieb des Kopfträgers 2 erfolgt durch die Gewindespindel 3 über einen am Kopfträger befestigten Mitnehmer 9. Hierzu ist der Mitnehmer an seinem freien Ende mit einem Keil 10 (Fig. 2) versehen, der in das Gewinde 11 der Gewindespindel 3 eingreift. Um den Keil 10 ständig in den Gewindegängen zu halten, ist am Kopfträger 2 gegenüber dem Mitnehmer 9 eine Blattfeder 12 angebracht, die sich parallel zum Mitnehmer erstreckt und sich an der Gewindespindel 3 abstützt.

Wie Figur 2 verdeutlicht, ist der Keilwinkel etwas größer bemessen als der Winkel, den die die Keilflächen 13 berührenden Flanken 14 der Gewindegänge bilden. Dadurch ist eine spielfreie Kraftübertragung erreicht. Darüberhinaus ist der derartig gestaltete Spindeltrieb durch die sich zwangsläufig einstellende Symmetrie der Keillage im Gewindegang selbstjustierend und damit vom Verschleiß unabhängig.

Die Gewindespindel 3 ist zur Grundplatte 5 hin verlängert und mit der Welle 15 eines Schrittmotors M direkt oder über ein Getriebe verbunden. Der Schrittmotor M ist zwischen dem Lagerbock 1 und der Grundplatte 5, an der er befestigt ist, angeordnet.

Der Kopfträger 2 weist ebenfalls eine über die Plattform 7 hinausgehende Verlängerung 16 auf. Das Ende der Verlängerung trägt einen kleinen Permanentmagneten 17 als Signalgeber zur Signalisierung einer bestimmten Position des Magnetkopfes, beispielsweise der ersten Spur. Als Signalempfänger dient ein auf der Grundplatte 5 befestigter Hallgenerator 18, dessen Ausgangsspannung sich, wie bekannt, durch das Magnetfeld des sich nähernden Permanentmagneten 17 des Kopfträgers 2 verändert. Mit Hilfe eines dem Hallgenerator 18 nachgeschalteten Operationsverstärkers wird abhängig von einer bestimmten Schwelle der Ausgangsspannung und damit abhängig von einer bestimmten Position des Kopfträgers ein Signalsprung erzeugt mit dem der elektronische Schalter des Schrittmotors M in den Sperrzustand gebracht und der Schrittmotor dadurch stillgesetzt wird. Eine derartige funktions- und schaltungstechnische Kombination von Hallgenerator und Operationsverstärker ist im Fachhandel als « Magnetischer Annäherungsschalter » bekannt. Es versteht sich, daß auch andere Schalteinrichtungen, wie optische, mechanische oder kapazitive Schalter, verwendet werden können.

Auf die vorstehend beschriebene Weise kann der Magnetkopf mit ausreichender Genauigkeit in eine Ausgangsstellung, vorzugsweise die erste Aufzeichnungsspur, gebracht werden.

Die Verschiebung des Magnetkopfes auf eine ausgewählte Spur erfolgt durch eine von einer Steuereinheit, beispielsweise von einem Microprozessor, vorgegebene Anzahl von Drehschritten des Schrittmotors M, der den Kopfträger 2 nach dem erläuterten Mechanismus bewegt. Die schaltungstechnischen Maßnahmen für den Schrittmotorbetrieb sind dem Fachmann bekannt und daher nicht weiters beschrieben.

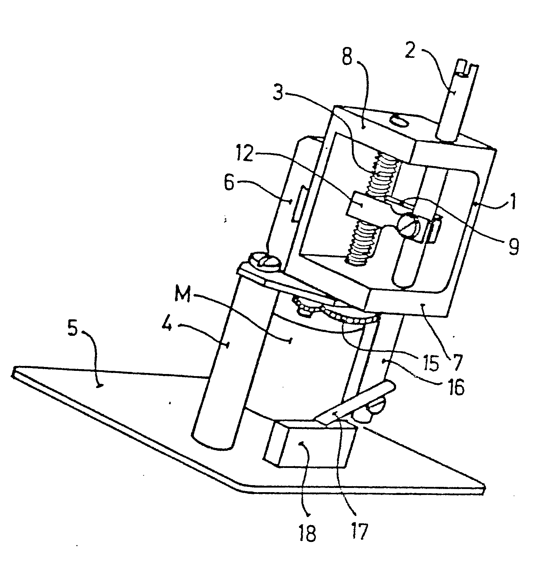

Zur exakten Ausrichtung des Magnetkopfes auf die ausgewählte Spur werden (in Figur 3 schematisch dargestellt) nacheinander zwei Lesespannungswerte $U_L$, die von den magnetischen Aufzeichnungen der erreichten Spur im Magnetkopf MK während der Verschiebung V zum Spurmaximum S hin bzw. von diesem weg induziert werden, in jeweils einem Kondensator 31, 31' gespeichert. Die beiden Kondensatoren werden hierzu mittels eines elektronischen Schalters 30, der vom Microprozessor ansteuerbar ist, nacheinander mit dem Magnetkopf verbunden. Ein den beiden Kondensatoren nachgeschalteter Differenzverstärker 32 bildet aus der Differenz der Kondensatorspannungen ein Ausgangssignal, das je nach Polarität der Differenz und damit je nach Bewegungsrichtung des Magnetkopfes bezüglich des Spurmaximums einen der beiden in der Digitaltechnik üblichen Schaltzustände (L, H) annimmt. Der Ausgang des Differenzverstärkers 32 wird mit dem Steuereingang des Schrittmotors M verbunden, so daß dessen Drehrichtung mit dem digitalen Ausgangssignal des Differenzverstärkers gesteuert werden kann. Ist nach dem vorstehenden Steuermechanismus das Spurmaximum erreicht, stellt sich entsprechend dem Steuerprinzip ein Pendeln um das Spurmaximum ein.

Bei Dauerversuchen mit der neuen Positioniereinrichtung konnten auf einem 8 mm-Band im Abstand von 150 μm mit einer Spurbreite von 100 μm aufgezeichnete Signale bei häufigem Spurwechsel mit einer Genauigkeit von ± 7 μm aufgefunden werden.

## Ansprüche

1. Positioniereinrichtung für einen Magnetkopf eines Magnetbandgerätes, bestehend aus einem Kopfträger (2), der den Magnetkopf in der Ebene des Magnetbandes verstellt und der einen in das Gewinde (11) einer Gewindespindel (3) eingreifenden, schneidenförmigen Mitnehmer (9) sowie eine gegenüberliegende und an der Gewindespindel anliegende Andruckfeder (12) aufweist, dadurch gekennzeichnet, daß zur Positionierung quer zu den Magnetbandspuren ein schneidenförmiger Mitnehmer (9), (10) vorgesehen ist, dessen Keilwinkel größer als der Winkel zwischen zwei Flanken (14) des Gewindeganges (11) der Gewindespindel (3) ist.

2. Einrichtung nach Anspruch 1, dadurch gekennzeichnet, daß die Gewindespindel (3) und der Kopfträger (2) in einem im wesentlichen aus zwei parallelen Plattformen (7, 8) bestehenden Rahmen (1) gelagert sind, wobei der Kopfträger (2) zur Spindelachse parallelverschieblich angeordnet ist.

## Claims

1. A positioning device for a magnetic head of a tape recorder, consisting of a head carrier (2) that moves the magnetic head in the plane of the magnetic tape and that is provided with a wedge-shaped follower (9) that engages in the thread (11) of a threaded spindle (3) and with leaf springs (12) in contact with the threaded spindle, wherein a wedge-shaped follower (9), (10) is provided transversely to the magnetic tape track for positioning, the angle of the wedge tip being larger than the angle between two flanks (14) of the thread (11) of the threaded spindle (3).

2. A device as claimed in claim 1, wherein the threaded spindle (3) and the head carrier (2) rest in a frame (1) consisting essentially of two parallel platforms (7, 8), the head carrier (2) being arranged so that it can move transversely to the spindle axis.

## Revendications

1. Dispositif de positionnement d'une tête magnétique d'un appareil à bande magnétique, constitué d'un support de tête (2) qui déplace la tête magnétique dans le plan de la bande magnétique et présente un entraîneur en forme de couteau (9) s'engageant dans le filetage (11) d'une vis (3) et un ressort de serrage (12) opposé s'appuyant sur la vis, caractérisé par le fait que pour le positionnement perpendiculairement aux pistes de la bande magnétique est prévu un entraîneur en forme de couteau (9, 10) dont l'angle de coin est supérieur à l'angle de deux flancs (14) du filetage (11) de la vis (3).

2. Dispositif selon la revendication 1, caractérisé par le fait que la vis (3) et le support de tête (2) sont montés dans un bâti (1) constitué essentiellement de deux plates-formes parallèles (7, 8), le support de tête (2) étant mobile parallèlement à l'axe de la vis.

FIG.1

FIG.3

FIG.2